# EUROPEAN PATENT SPECIFICATION

(11) **EP 2 077 224 B1**
(45) Date of publication and mention of the grant of the patent: **22.01.2014**
(21) Application number: 08254124.4
(22) Date of filing: 23.12.2008
(51) Int. Cl.: B62K 11/04

(54) **Motorcycle**
Motorrad
Motocyclette

(30) Priority: 28.12.2007 JP 2007341399
(43) Date of publication of application: 08.07.2009
(73) Proprietor: Yamaha Hatsudoki Kabushiki Kaisha, Shizuoka-ken Shizuoka 438-8501 (JP)
(72) Inventor: Susaki, Tomoshige, Iwata-shi Shizuoka-ken 438-8501 (JP)
(74) Representative: Moreland, David

(56) References cited:
- EP-A2- 0 826 584
- EP-A2- 1 780 108
- GB-A- 191 410 472
- JP-A- 2000 085 668
- US-A- 4 139 072
- US-A- 5 480 001

## Description

### FIELD OF THE INVENTION

The present invention relates to a motorcycle, specifically to a body frame structure of a motorcycle.

### BACKGROUND TO THE INVENTION

Known vehicle body frame structure include a so-called mono backbone type. In the mono backbone type frame structure, a main frame that suspends an engine of a motorcycle extends from a head pipe to the rear in a vehicle width center, bends downward at a rear side of the engine, and reaches a bottom region of the vehicle. Side plates are separately attached to both right and left sides at a bottom end portion of the main frame, and a front end portion of a swing arm is supported between each of the side plates and the main frame.

JP-A-2007-118865 described below discloses an example of a motorcycle having such a body frame structure. In the same motorcycle, right and left side plates are secured by bolting to a main frame in the center. From the right and left side plates, two bosses (top and bottom) extend to the main frame respectively. These bosses abut onto the main frame, which accordingly adjusts a space between the main frame and each of the side plates.

However, the conventional mono backbone type body frame described above joins the right and left side plates by patching them using the bosses and the main frame. Because of this, in order to smoothly receive a load added to one side plate by an entire body frame including the right and left side plates and the main frame to exert enough vehicle rigidity, it requires special actions such as increasing thickness of the main frame or a boss diameter of the side plate.

JP2000-085668, which is considered the closest prior art to the subject matter of claim 1, describes a backbone type motorcycle body frame that comprises a head portion, a centre portion extending rearwardly from the head portion and left and right pivot plates. The centre portion is formed of cast aluminium and is formed in the shape of a square pipe. A rear part of the centre portion comprises an inclined part and a cross part that projects to the left and right is provided at the rear of the centre portion. The cross part comprises contact surfaces at its left and right ends for contacting the left and right pivot plates, which are attached to the cross part via bolts. The engine is supported from an engine hanger arm provided on a rearwardly extending section of the centre portion of the main frame and from the pivot plates.

US5480001 describes a motorcycle comprising a body frame in which a front end of the frame is provided with a head pipe for supporting a front suspension. A swing arm for supporting a rear wheel is pivotably supported on a rear portion of the body frame behind the engine. A frame structure is provided wherein the body frame has a single main pipe comprising a rearwardly extending portion located over the engine and extending rearwardly from the head pipe. A bent portion extends from a rear end of the rearwardly extending portion. A downwardly extending portion is located behind the engine and extends downwardly from the bent portion. A pair of cross pipes laterally extend and are vertically spaced from each other and are connected at their intermediate portions to the downwardly extending portion of the main pipe. A pair of supporting plates are provided on each side of the downwardly extending portion of the main pipe wherein the supporting plates are connected to respective ends of the cross pipes that extend from the downwardly extending portion.

EP0826584 describes a single cradle type motorcycle body frame. A main pipe extends rearward from a head pipe and a centre pipe extends downward from a rear portion of the main pipe. A down tube extends downwardly from the head pipe and a lower pipe extends rearward from a lower portion of the down tube. Each of the main pipe, centre pipe, down tube and lower pipe is formed of square pipe. A lateral width of the centre pipe is larger than that of the main pipe and a lateral width of the lower pipe is larger than that of the down tube. The main pipe is joined to the centre pipe via a blind plate to accommodate differences in sizes between the centre pipe and the main pipe. The blind plate appears to be provided in the rearwardly extending portion of the frame. A pair of brackets comprising rider's and passenger's foot rests are mounted to the body frame at three points. One of these mounting points of the bracket is co-fastened to the centre pipe together with left and right arm portions of the swing arm by means of a pivot, and the remaining two points of the bracket are mounted to pipe like bosses that extend from the body frame.

US4139072 describes a motorcycle frame that comprises two or more plate like members that are removably secured together. The plate like members are secured together by spacers. The plate like members comprise a forward extension or end portion, a downward extension and a rearward extension. The frame is provided with auxiliary plate like members that serve as mounting plates for the engine. The provision of spacer sleeves allows the auxiliary plates to be set at any desired spacing whilst keeping the plate like frame members at constant spacing. Rearward extensions of the plates that make up the frame are relatively wide, but may be narrower than forward or downward extensions. The rearward extensions of the plates may be splayed outwardly to ensure sufficient clearance.

The present invention is made in view of the above problems. An object of the invention is to provide a motorcycle that can maintain sufficient vehicle rigidity with a simple structure.

### SUMMARY OF THE INVENTION

Various aspects of the present invention are defined in the independent claims. Some preferred features are defined in the dependent claims.

According to an aspect of the present invention there is provided a motorcycle comprising:
a main frame having a vertically extending portion;
a pair of side plates disposed apart on opposing sides of the vertically extending portion; and
a supporting pipe fixed to the vertically extending portion and extending in a vehicle width direction, wherein the pair of side plates are attached to respective ends of the support pipe; wherein
the vertically extending portion includes one or more box-shaped pipes; and
the supporting pipe is joined to a surface of a vehicle front side or a vehicle rear side of the one or more box-shaped pipes.

It should be understood that terms used herein such as "vertical" and "vertically" are applied when the motorcycle is arranged in an upright position. Such terms should be construed accordingly.

The vertically extending portion may be arranged in a vehicle width center.

The main frame may further comprise a fore-and-aft extension portion extending rearward from a head pipe in a vehicle width center.

The box-shaped pipe may be square, rectangular, polygonal or the like. The box-shaped pipe may be peripherally continuous, or may include one or more peripheral gaps or discontinuities or the like.

The vertically extending portion may include a plurality of box-shaped pipes arranged in the vehicle fore-and-aft direction and jointed to each other.

The plurality of box-shaped pipes may be arranged with flat surfaces thereof facing the vehicle fore-and-aft direction.

The box-shaped pipe may be formed with a vertically extending groove.

The motorcycle may further comprise a bracket joined to the vertically extending portion. The bracket may be adapted to be secured to a crankcase of an engine.

A front end of a back stay may be joined to the bracket and may extend rearward and upward relative to the vertically extending portion.

The supporting pipe may be a box-shaped pipe and may be joined to a lower end of the vertically extending portion.

Each side plate may be secured to the supporting pipe at a plurality of positions.

The bracket to which a rear side of a crankcase of an engine is attached may be jointed to the supporting pipe.

The motorcycle may further comprise a down tube extending downward from a head pipe. A lower end of the down tube may be attached to a front side of the crankcase.

The vertically extending portion may vary in width along a vertical direction thereof.

According to a further aspect of the present invention there is provided a motorcycle frame comprising:
a vertically extending portion;
a pair of side plates disposed apart on opposing sides of the vertically extending portion; and
a supporting pipe fixed to the vertically extending portion and extending in a frame width direction, wherein the pair of side plates are attached to respective ends of the support pipe); wherein
the vertically extending portion includes one or more box-shaped pipes; and
the supporting pipe is joined to a surface of a vehicle front side or a vehicle rear side of the one or more box-shaped pipes.

Described herein by way of example only is a motorcycle which includes: a main frame that has an up-and-down extension part extending in a vehicle up-and-down direction in a vehicle width center; a pair of side plates disposed apart in the right and left of the up-and-down extension part; and a supporting pipe, which is fixed to the up-and-down extension part, extends in a vehicle width direction, and have both ends to which the pair of side plates is attached.

According to the present invention, the supporting pipe is fixed to the vertically extending portion or the up-and-down extension part of the main frame, the supporting pipe extends in the vehicle width direction, and the pair of right and left side plates is attached to right and left ends of the supporting pipe respectively. Therefore, a load added to one side plate is smoothly transmitted through the supporting pipe to the entire body frame including the right and left side plates and the main frame. In this way, sufficient vehicle rigidity can be maintained with a simple structure.

### BRIEF DESCRIPTION OF THE DRAWINGS

These and other aspects of the present invention will now be described, by way of example only, with reference to the accompanying drawings, in which:
FIG. 1 is an external side view of a motorcycle according to an embodiment of the present invention;
FIG. 2 is a whole perspective view showing a body frame of the motorcycle according to the embodiment of the present invention;
FIG. 3 is an enlarged perspective view showing a side plate on a vehicle left side;
FIG. 4 is a view showing a vertically extending portion that constitutes a body frame as seen from a vehicle front; and
FIG. 5 is a view showing the vertically extending portion that constitutes the body frame as seen from a vehicle rear.

### DETAILED DESCRIPTION OF THE DRAWINGS

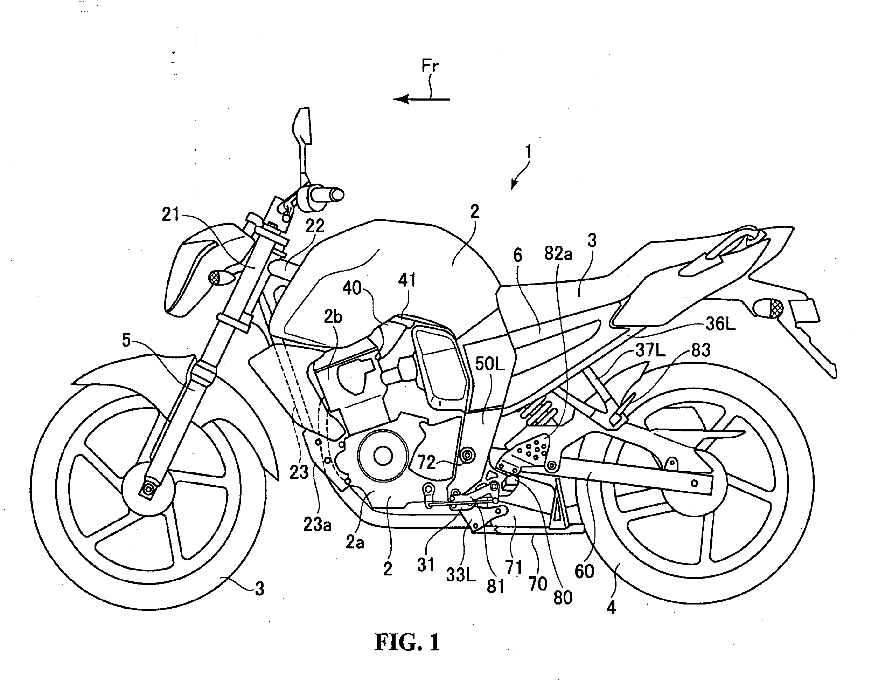

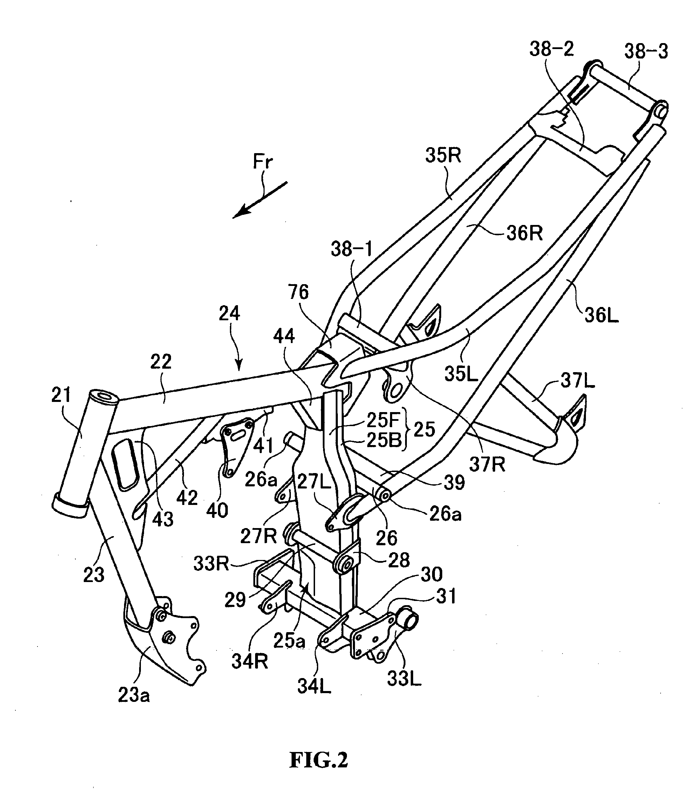

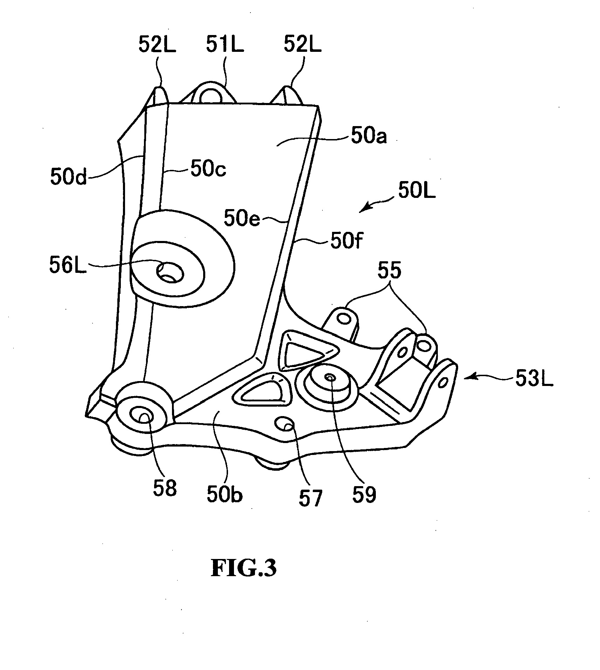

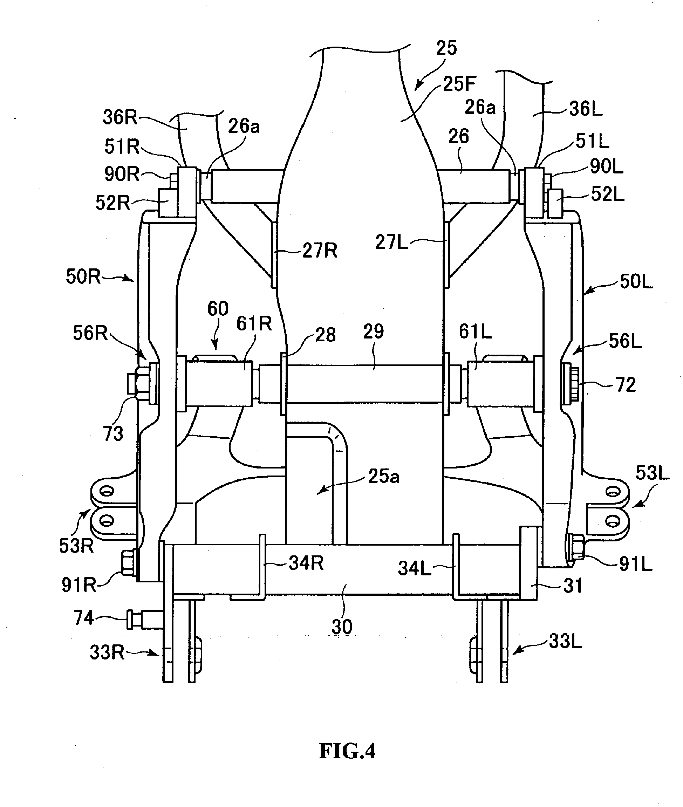

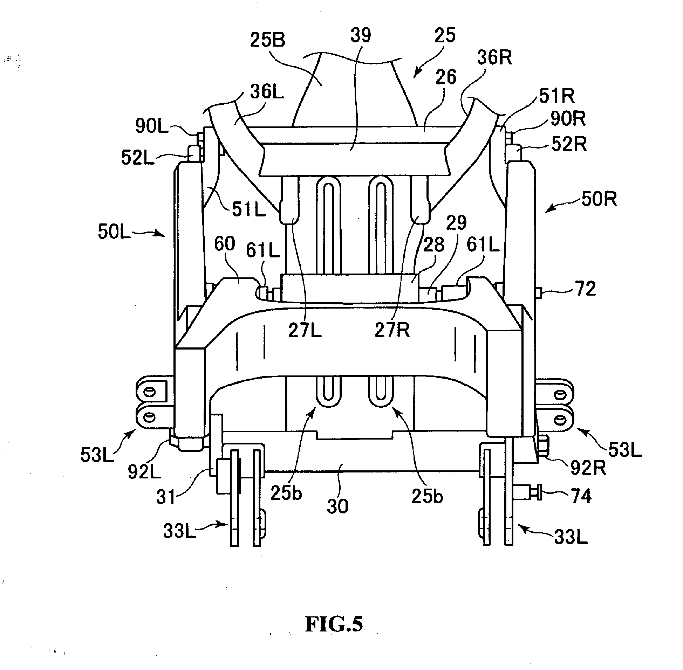

FIG. 1 is an external side view of a motorcycle 1 according to an embodiment of the present invention. FIG. 2 is a perspective view showing an entire body frame of the motorcycle 1. FIG. 3 is an enlarged perspective view showing a side plate 50L arranged on the left of a vertically extending portion 25 (also defined herein as an up-and-down extension part) of a main frame 24. FIG. 4 is a view of the up-and-down extension part 25 as seen from the front of a vehicle. FIG. 5 is a view of the up-and-down extension part 25 as seen from the rear of the vehicle.

As shown in FIG. 1, in the motorcycle 1, a front fork 5, which rotatably supports a front wheel 3, is supported for free steering from side to side by a head pipe 21 in the upper portion of the front fork 5. As shown in FIG. 2, a fore-and-aft extension part or portion 22 of the main frame 24 linearly extends rearward and downward in a vehicle width center, wherein the tip of the extension part or portion 22 is welded to the rear side of the head pipe 21. To the head pipe 21, an upper end portion of a down tube 23 is further welded, and the down tube 23 extends linearly downward thereafter. A bracket 23a is attached to a lower end portion of the down tube 23. As shown in FIG. 1, the bracket 23a is fixed to a front side of a crank case 2a of an engine 2. A hanger 40 is attached through a reinforcing member 41 to a middle portion of the fore-and-aft extension part 22. The hanger 40 extends downwards from the middle portion of the fore-and-aft extension part 22. A cylinder body 2b of the engine 2 is fixed to the tip of the hanger 40.

The side plate 50L, which is part of vehicle rigid members, is arranged at the rear of the engine 2. A through bolt 72, which extends in a vehicle width direction, is arranged in the vicinity of the center of the vertical direction of the side plate 50L. The through bolt 72 rotatably supports a front end portion of a rear swing arm 60 that supports a rear wheel 4. Accordingly, the rear swing arm 60 can swing up and down around the through bolt 72.

As shown in FIG. 1, a straddle type fuel tank 2 is disposed on the fore-and-aft extension part 22. A riding seat 3 is disposed to the rear of the fuel tank 2. As shown in FIG. 2, the fore-and-aft extension part 22 of the main frame 24 is a straight round pipe, which extends from the head pipe 21 to the vicinity of a rear end of the fuel tank 2. A saddleback bracket 76 is welded to a rear end of the fore-and-aft extension part 22 so as to cover the rear end from the above. Front end portions of a pair of right and left seat rails 35L, 35R are respectively welded to both side surfaces of the saddleback bracket 76. The seat rails 35L, 35R are also constituted by round pipe, and extend from a side surface of the saddleback bracket 76 outward and rearward, thereafter linearly extending rearward and upward. The seat rails 35L, 35R are connected at three places by cross members 38-1, 38-2, 38-3 from a vehicle front in this order. The riding seat 3 is mounted on these cross members.

The up-and-down extension part 25, which extends linearly in a vehicle vertical direction, is welded to a rear end of the fore-and-aft extension part 22. The fore-and-aft extension part 22 and the up-and-down extension part 25 are each welded to the saddleback bracket 76 and a reinforcing member 44, and rigidly fixed to each other by the saddleback bracket 76 and the reinforcing member 44 arranged inside of a connecting place, thus constituting the main frame 24.

A reinforcing member 43 is welded to the inside of a connecting place of the fore-and-aft extension part 22, the head pipe 21, and the down tube (round pipe) 23. Furthermore, the reinforcing member 41 is welded to a middle portion and bottom side of the fore-and-aft extension part 22. A reinforcing pipe 42 is disposed between the reinforcing member 41 and the reinforcing member 43. Accordingly, the fore-and-aft extension part 22, the head pipe 21, and the down tube 23 are fixed rigidly to each other.

The up-and-down extension part 25 is constituted in the following way. A front side pipe 25F and a back side pipe 25B, which are square pipes whose cross sections are rectangular, are arranged in such a way that their wide side surfaces are longitudinally directed, and fixed by welding. An upper portion has a certain width, and the width gradually increases at a middle portion, and a bottom portion again has a certain width. In other words, the up-and-down extension part 25 varies the width in accordance with the extending direction (up-and-down direction). This assists to maintain the rigidity required for the vehicle.

A first supporting pipe 26 is welded to a rear side surface of the backside pipe 25B of the up-and-down extension part 25. The first supporting pipe 26 is a round pipe, and extends linearly in the vehicle width direction. A cap 26a in which a female screw thread is formed is welded to both right and left ends of the first supporting pipe 26.

L-shaped common brackets 27L, 27R are welded to both side surfaces below the first supporting pipe 26 in the up-and-down extension part 25. The common brackets 27L, 27R have the shape of a flat plate bent inside at the rear end. The bent portion is also welded to a rear surface of the back side pipe 25B, and an inner surface of a portion extending fore-and-aft is welded to side surfaces of the front side pipe 25F and the back side pipe 25B. Each front end of the common brackets 27L, 27R protrudes forward of a front surface of the front side pipe 25F of the up-and-down extension part 25. A bolt insertion hole to fix a rear side surface upper side of the crank case 2a is formed in the protruded portions. Each front end of back stays 36L, 36R constituted by round pipe is welded to an outer surface of a portion extending in the fore-and-aft direction of the common brackets 27L, 27R. The back stays 36L, 36R extend rearward and upward, and each rear end is welded to a lower surface of a rear end side of the seat rails 35L, 35R. A cross member 39 is welded to front end sides of the back stays 36L, 36R, and the back stays 36L, 36R are connected accordingly. A base end portion of rear footrest stays 37L, 37R to which a footrest 83 (refer to FIG. 1) is attached for a passenger to set his foot is welded to a middle portion of the back stays 36L, 36R, and extends downward therefrom.

A pivot shaft bracket 28, which is in the shape of a long plate bent forward at the right and left, is attached below the common brackets 27L, 27R. Each bent portion of the pivot shaft bracket 28 is welded to a side surface of the front side pipe 25F and the back side pipe 25B, and a portion in between is welded to a rear surface of the back side pipe 25B. A front end of each bent portion of the pivot shaft bracket 28 protrudes forward of a front surface of the front side pipe 25F. An insertion hole, through which a pivot shaft supporting pipe 29 made of a round pipe extending linearly in a vehicle width direction, is formed in the protruded portions. The pivot shaft supporting pipe 29 is inserted in the insertion holes and fixed by welding.

A second supporting pipe 30 extending linearly in the vehicle width direction is arranged at a lower end of the up-and-down extension part 25. The up-and-down extension part 25 and the second supporting pipe 30 are connected while forming the shape of inverted letter T. The second supporting pipe 30 is a square or rectangular pipe with a rectangular cross section, and arranged in the way that a wide side surface faces a vertical direction. An upper surface of the second supporting pipe 30 is welded to a lower end surface of the up-and-down extension part 25. To a left end of the second supporting pipe 30, a small plate 31 in the shape of a flat plate is welded so as to close an opening end. A center stand bracket 33L, which is formed with two parallel plates extending downwards, is welded to a lower surface left side of the second supporting pipe 30. To the center stand bracket 33L, an exhaust chamber 71 to which an exhaust pipe of the engine 2 is connected is fixed, and a left side base end portion of the center stand 70 which surrounds the periphery of the exhaust chamber 71 in a retraction position is rotatably attached (refer to FIG. 1). A center stand bracket 33R is welded to a right end side of the second supporting pipe 30. The center stand bracket 33R is also formed with two parallel plates extending downwards. An outside plate is welded so as to close a right side opening end of the second supporting pipe 30, and an inside plate is welded to a lower surface of the second supporting pipe 30. A right side base end portion of the center stand 70 is rotatably attached to the center stand bracket 33R. A spring attachment boss 74 to which one end of a spring (not shown) for urging the center stand 70 to a retraction position or an upright position is attached is formed in the center stand bracket 33R. The other end of the spring is attached to a foot side of the center stand 70.

Engine brackets 34L, 34R are welded to a front surface of the second supporting pipe 30 so as to protrude forward, and fix a rear side surface lower side of the crankcase 2a accordingly. That is, a front portion of the crankcase 2a of the engine 2 is fixed by the down tube 23, and a rear portion upper side of the crankcase 2a is fixed to the up-and-down extension part 25 through the common brackets 27L, 27R. The rear part lower side of the crankcase 2a is fixed to the up-and-down extension part 25 through the engine brackets 34L, 34R and the second supporting pipe 30. The cylinder body 2b is fixed to the fore-and-aft extension part 22 through the hanger 40 and the reinforcing member 41. In this way, the engine 2 is rigidly fixed to various places of the body frame, and functions as part of vehicle rigid members.

A recess 25a to evade the bulge of the crankcase 2a is formed in a right side lower portion of a front surface of the front side pipe 25F. As shown in FIG. 5, two grooves 25b, 25b extending in the up-and-down direction from a lower portion of the pivot shaft bracket 28 to a rear end side portion of the common brackets 27L, 27R are formed in the rear surface of the rear side pipe 25B. Accordingly, strength of the up-and-down extension part 25 can be enhanced.

As shown in FIG. 1, FIG. 4 and FIG. 5, the side plates 50L, 50R are separately arranged on the right and left of the up-and-down extension part 25 of the main frame 24. The side plates 50L, 50R are aluminum die casting members having generally the same shape. Hereinafter, description is made mainly for the side plate 50L. Corresponding parts of the side plate 50R are indicated by corresponding symbols and their descriptions are omitted.

As shown in detail in FIG. 3, the side plate 50L has an integral plate-shaped part 50a extending in the vehicle up-and-down direction, and a footrest bracket part 50b extending rearward from a lower portion of the plate part 50a, which is generally L-shaped in side view. The plate part 50a is formed with two generally parallel corners 50c, 50d extending in the up-and-down direction at the edge of a vehicle front. Two generally parallel corners 50e, 50f extending in the up-and-down direction are also formed at a rear edge of the plate part 50a. Accordingly, the rigidity of the plate part 50a is improved. An insertion hole 56L, through which the through bolt 72 as a pivot shaft is inserted, is formed in a middle portion of the plate part 50a. As shown in FIG. 4 and FIG. 5, the through bolt 72 inserted in the insertion hole 56L sequentially passes a cylindrical shaped collar part 61L formed in the left side front end of the rear swing arm 60, a pivot shaft supporting pipe 29, and a cylindrical shaped collar part 61R formed in the right side front end of the rear swing arm 60, and reaches an insertion hole 56R of the side plate 50R. A nut 73 is screwed on the tip of the through bolt 72. In this way, the rear swing arm 60 is swingably supported by the through bolt 72.

Protrusions 52L, 52L, which are arranged separately in the vehicle fore-and-aft direction and extend upward, are formed in an upper end surface of the plate part 50a of the side plate 50L. As shown in FIG. 1, a rear bottom portion of the fuel tank 2 and a bottom portion of the riding seat 3 are covered by a side cover 6, which is a resinous exterior cover. The protrusions 52L, 52L of the plate part 50a are covered by a rubber buffer cover (not shown). In this state, the protrusions 52L, 52L are inserted in a hole (not shown) formed in a lower surface of the side cover 6. Accordingly, a lower portion of the side cover 6 is fixed to the side plate 50L.

An upper part attachment bracket part 51L is formed inside in the vehicle width direction between the protrusions 52L, 52L (back surface side of the plate part 50). The upper part attachment bracket part 51L is formed in the shape of a plate extending upward, and has a bolt insertion hole generally in the middle. As shown in FIG. 4 and FIG. 5, a bolt 90L inserted in this insertion hole is screwed to a left end of the first supporting pipe 26, that is, the cap 26a. In this way, an upper portion of the side plate 50L is fixed to one end of the first supporting pipe 26 by the bolt 90L. As shown in FIG. 4 and FIG. 5, with regard to the side plate 50R arranged on the right of the up-and-down extension part 25, the bolt 90R is inserted in the opening of the attachment bracket 51R, the bolt 90R is screwed to a right end of the first supporting pipe, that is, the cap 26a, and an upper portion of the side plate 50R is fixed to the other end of the first supporting pipe.

An attachment bolt insertion hole 58 is also formed in a bottom end portion of the plate part 50a. As shown in FIG. 4, a bolt 91L passed through the attachment bolt insertion hole 58 is screwed to the small plate 31. Furthermore, an attachment bolt insertion hole 57 is formed in a bottom edge portion of a footrest bracket part 50b. As shown in FIG. 5, a bolt 92L inserted in the attachment bolt insertion hole 57 is also screwed to the small plate 31. In this way, a bottom portion of the side plate 50L is fixed to the up-and-down extension part 25 side of the main frame 24 at two places separated in the vehicle fore-and-aft direction. Similarly, the side plate 50R is also screwed to the center stand bracket 33R by the bolt 91R and the bolt 92R at two places separated in the vehicle fore-and-aft direction at the bottom edge portion thereof, and is fixed to the main frame 24 in the up-and-down extension part 25 side through the center stand bracket 33R. The side plate 50L is rigidly attached to a body frame side above and below the through bolt 72 as a pivot shaft.

A footrest bracket 53L to support a base end portion of a footrest 80 (refer to FIG. 1) is formed at a rear end portion of the footrest bracket part 50b of the side plate 50L. A shaft insertion hole 59 in which a rotational shaft of a shift pedal 81 (refer to FIG. 1) is inserted is formed generally in the center of the footrest bracket part 50b. Cover bracket parts 55, 55 are formed in an upper edge of the footrest bracket part 50b. A metal cover 82a (refer to FIG. 1), which covers a side portion of the rear swing arm 60, is fastened to the cover bracket parts 55, 55 by bolt.

According to the motorcycle 1 described above, the main frame 24 has: the fore-and-aft extension part 22 extending from the head pipe 21 to the rear of the vehicle in the vehicle width center; and the up-and-down extension part 25 extending in the vehicle up-and-down direction in the vehicle width center. The main frame 24 is provided with the pair of side plates 50L, 50R that are separated in the right and left of the up-and-down extension part 25. The first supporting pipe 26 and the second supporting pipe 30 are fixed to the up-and-down extension part 25 and extends in the vehicle width direction. The side plates 50L, 50R are respectively attached to the ends, respectively, of the first and second supporting pipes 26, 30. According to such a structure, a load added to the side plates 50L, 50R smoothly transmits to the entire body frame through the first supporting pipe 26 and the second supporting pipe 30. Thus, sufficient vehicle rigidity can be maintained with a simple structure.

The up-and-down extension part 25 is structured by including a square or rectangular pipe extending in the vehicle up-and-down direction. Therefore, the body frame can be formed at low cost. The up-and-down extension part 25 is structured by the front side pipe 25F and the back side pipe 25B, which extend in the vehicle up-and-down direction, and which are a plurality of square pipes jointed to each other placed side by side in the vehicle fore-and-aft direction. Therefore, rigidity of the up-and-down extension part can be enhanced by a reasonable cost structure.

The front side pipe 25F and the back side pipe 25B are arranged in the way that their flat side surfaces face a vehicle fore-and-aft direction, and the first supporting pipe 26 is joined to a side surface in the rear side of the up-and-down extension part 25. Therefore, the first supporting pipe 26 can be rigidly welded to a flat surface of the back side surface 25. It is acceptable of course that the first supporting pipe 26 is jointed to a side surface in the front side of the up-and-down extension part 25. The groove 25b extending in the vehicle up-and-down direction is formed in a rear surface of the back side pipe 25B. Therefore, strength (surface rigidity) of the up-and-down extension part 25 can be enhanced.

The common brackets 27L, 27R to which the crankcase 2a of the engine 2 is attached are jointed to the up-and-down extension part 25. Therefore, the engine 2 can be fixed rigidly to the up-and-down extension part 25. Furthermore, to the common brackets 27L, 27R, front ends of the back stays 36L, 36R extending rearward and upward at the rear of the up-and-down extension part 25 are welded. Accordingly, the bracket for supporting the engine 2 and the bracket for supporting the back stay 36L or 36R can be made to one piece, so a body weight reduction and a cost reduction can be achieved.

The second supporting pipe 30 is a square pipe that is jointed to a lower end of the up-and-down extension part 25. Accordingly, rigidity in a direction parallel to a side surface of the square pipe can be easily maintained. The side plates 50L, 50R are tightened to the second support pipe 30 at plural positions. Accordingly, the side plates 50L, 50R can be rigidly fixed to the second support pipe 30. Furthermore, the engine brackets 34R, 34L to which a rear side of the crankcase 2a of the engine 2 is attached are jointed to the second supporting pipe 30. Accordingly, the crankcase 2a can also be fixed to the second supporting pipe 30.

According to the present embodiment, the down tube 23 extending downward from the head pipe 21 is further disposed, and a lower end of the down tube is attached to a front side of the crankcase 2a through the bracket 23a, so that the body frame has a diamond shape to enhance the vehicle rigidity. Furthermore, the up-and-down extension part 25 varies its width depending on positions in its extending direction. Accordingly, rigidity required for each position in the extending direction can be easily maintained.

### Description of Reference Numerals

1: motorcycle
2: engine
2a: crankcase
3: front wheel
4: rear wheel
5: front fork
6: side cover
21: head pipe
22: fore-and-aft extension part
23: down tube
24: main frame
25: up-and-down extension part
25a: recess
25b: groove
25F: front side pipe
25B: back side pipe
26: first supporting pipe
27L, 27R: common bracket
28: pivot shaft bracket
29: pivot shaft supporting pipe
30: second supporting pipe
31: small plate
33L, 33R: center stand bracket
34L, 34R: engine bracket
35L, 35R: seat rail
36L, 36R: back stay
37L, 37R: rear footrest stay
38, 39: cross member
40: hanger
41, 43, 44: reinforcing member
42: reinforcing pipe
50L, 50R: side plate, 50a plate part
50b: footrest bracket part
50c, 50d, 50e, 50f: corner
51L, 51R: upper part attachment bracket part
52L, 52R: protrusion
53L, 53R: footrest bracket
55: cover bracket part
56L, 56R: pivot shaft insertion hole
57, 58: attachment bolt insertion hole
59: shaft insertion hole
60: rear swing arm
61L, 61R: collar part
70: center stand
71: exhaust chamber
72: through bolt
74: spring attachment boss
76: saddleback bracket
80, 83: footrest
81: shift pedal
82: metal cover
90L, 90R, 91L, 91R, 92L, 92R: bolt

## Claims

1. A motorcycle (1) comprising:
a main frame (24) having a vertically extending portion (25);
a pair of side plates (50L, 50R) disposed apart on opposing sides of the vertically extending portion (25); and
a supporting pipe (26, 30) fixed to the vertically extending portion (25) and extending in a vehicle width direction, wherein the pair of side plates (50L, 50R) are attached to respective ends of the supporting pipe (26, 30); wherein
the vertically extending portion (25) includes one or more box-shaped pipes; **characterized in that**
the supporting pipe (26, 30) is joined to a surface of a vehicle front side or a vehicle rear side of the one or more box-shaped pipes.

2. The motorcycle (1) according to Claim 1, wherein the vertically extending portion (25) is arranged in a vehicle width center.

3. The motorcycle (1) according to Claim 1 or 2, wherein the main frame (24) further comprises a fore-and-aft extension portion (22) extending rearward from a head pipe (21) in a vehicle width center.

4. The motorcycle (1) according to any preceding Claim, wherein the vertically extending portion (25) includes a plurality of box-shaped pipes,
the plurality of box-shaped pipes (25F, 25B) being arranged in the vehicle fore-and-aft direction and jointed to each other.

5. The motorcycle (1) according to Claim 4, wherein
the plurality of box-shaped pipes (25F, 25B) are arranged with flat surfaces thereof facing the vehicle fore-and-aft direction, and
the supporting pipe (26, 30) is joined to the surface of the vehicle front side or the vehicle rear side of the plurality of box-shaped pipes.

6. The motorcycle (1) according to any preceding Claim, wherein the box-shaped pipe is formed with a groove (25b).

7. The motorcycle (1) according to any preceding Claim, further comprising a bracket (27L, 27R) joined to the vertically extending portion, wherein the bracket (27L, 27R) is adapted to be secured to a crankcase (2a) of an engine (2).

8. The motorcycle (1) according to Claim 7, wherein a front end of a back stay (36L, 36R) is joined to the bracket (27L, 27R) and extends rearward and upward relative to the vertically extending portion (25).

9. The motorcycle (1) according to any preceding Claim, wherein the supporting pipe (26, 30) is a box-shaped pipe and is joined to a lower end of the vertically extending portion (25).

10. The motorcycle (1) according to any preceding Claim, wherein each side plate (50L, 50R) is secured to the supporting pipe (26, 30) at a plurality of positions.

11. The motorcycle (1) according to any one of Claims 7 to 10, wherein the bracket (27L, 27R) to which a rear side of a crankcase (2a) of an engine (2) is attached is jointed to the supporting pipe (26, 30).

12. The motorcycle (1) according to any preceding Claim, further comprising a down tube (23) extending downward from a head pipe (21), wherein a lower end of the down tube (23) is attached to a front side of the crankcase (2a).

13. The motorcycle (1) according to any preceding Claim, wherein the vertically extending portion (25) varies in width along a vertical direction thereof.

14. A motorcycle frame (24) comprising:
a vertically extending portion (25);
a pair of side plates (50L, 50R) disposed apart on opposing sides of the vertically extending portion (25); and
a supporting pipe (26, 30) fixed to the vertically extending portion (25) and extending in a frame width direction, wherein the pair of side plates (50L, 50R) are attached to respective ends of the support pipe (26, 30); wherein
the vertically extending portion (25) includes one or more box-shaped pipes; **characterized in that**
the supporting pipe (26, 30) is joined to a surface of a vehicle front side or a vehicle rear side of the one or more box-shaped pipes.

## Patentansprüche

1. Motorrad (1), das Folgendes umfasst:
einen Hauptrahmen (24), der einen sich in Vertikalrichtung erstreckenden Abschnitt (25) hat,
ein Paar von Seitenplatten (50L, 50R), die getrennt auf entgegengesetzten Seiten des sich in Vertikalrichtung erstreckenden Abschnitts (25) angeordnet sind, und
ein Stützrohr (26, 30), das an dem sich in Vertikalrichtung erstreckenden Abschnitt (25) befestigt ist und sich in einer Fahrzeugbreitenrichtung erstreckt, wobei das Paar von Seitenplatten (50L, 50R) an jeweiligen Enden des Stützrohres (26, 30) befestigt ist, wobei
der sich in Vertikalrichtung erstreckende Abschnitt (25) ein oder mehrere kastenförmige Rohre einschließt, **dadurch gekennzeichnet, dass**
das Stützrohr (26, 30) mit einer Oberfläche einer Fahrzeugvorderseite oder einer Fahrzeugrückseite des einen oder der mehreren kastenförmigen Rohre verbunden ist.

2. Motorrad (1) nach Anspruch 1, wobei der sich in Vertikalrichtung erstreckende Abschnitt (25) einer Fahrzeugbreitenmitte angeordnet ist.

3. Motorrad (1) nach Anspruch 1 oder 2, wobei der Hauptrahmen (24) ferner einen sich nach vorn und hinten erstreckenden Erweiterungsabschnitt (22) umfasst, der sich von einem Kopfrohr (21) in einer Fahrzeugbreitenmitte nach hinten erstreckt.

4. Motorrad (1) nach einem der vorhergehenden Ansprüche, wobei der sich in Vertikalrichtung erstreckende Abschnitt (25) mehrere kastenförmige Rohre einschließt,
wobei die mehreren kastenförmigen Rohre (25F, 25B) in der Fahrzeuglängenrichtung angeordnet und miteinander verbunden sind.

5. Motorrad (1) nach Anspruch 4, wobei
die mehreren kastenförmigen Rohre (25F, 25B) so angeordnet sind, dass flache Oberflächen derselben in die Fahrzeuglängenrichtung zeigen, und
das Stützrohr (26, 30) mit der Oberfläche der Fahrzeugvorderseite oder der Fahrzeugrückseite der mehreren kastenförmigen Rohre verbunden ist.

6. Motorrad (1) nach einem der vorhergehenden Ansprüche, wobei das kastenförmige Rohr mit einer Rille (25b) geformt ist.

7. Motorrad (1) nach einem der vorhergehenden Ansprüche, das ferner eine Stütze (27L, 27R) umfasst, die mit dem sich in Vertikalrichtung erstreckenden Abschnitt verbunden ist, wobei die Stütze (27L, 27R) dafür eingerichtet ist, an einem Kurbelgehäuse (2a) eines Motors (2) befestigt zu werden.

8. Motorrad (1) nach Anspruch 7, wobei ein vorderes Ende einer hinteren Strebe (36L, 36R) mit der Stütze (27L, 27R) verbunden ist und sich im Verhältnis zu dem sich in Vertikalrichtung erstreckenden Abschnitt (25) nach hinten und nach oben erstreckt.

9. Motorrad (1) nach einem der vorhergehenden Ansprüche, wobei das Stützrohr (26, 30) ein kastenförmiges Rohr ist und mit einem unteren Ende des sich in Vertikalrichtung erstreckenden Abschnitts (25) verbunden ist.

10. Motorrad (1) nach einem der vorhergehenden Ansprüche, wobei jede Seitenplatte (50L, 50R) an mehreren Stellen an dem Stützrohr (26, 30) befestigt ist.

11. Motorrad (1) nach einem der Ansprüche 7 bis 10, wobei die Stütze (27L, 27R), an der eine Rückseite eines Kurbelgehäuses (2a) eines Motors (2) befestigt ist, mit dem Stützrohr (26, 30) verbunden ist.

12. Motorrad (1) nach einem der vorhergehenden Ansprüche, das ferner ein Unterrohr (23) umfasst, dass sich von dem Kopfrohr (21) aus nach unten erstreckt, wobei ein unteres Ende des Unterrohres (23) an einer Vorderseite des Kurbelgehäuses (2a) befestigt ist.

13. Motorrad (1) nach einem der vorhergehenden Ansprüche, wobei der sich in Vertikalrichtung erstreckende Abschnitt (25) entlang einer Vertikalrichtung desselben in der Breite variiert.

14. Motorradrahmen (24), der Folgendes umfasst:
einen sich in Vertikalrichtung erstreckenden Abschnitt (25),
ein Paar von Seitenplatten (50L, 50R), die getrennt auf entgegengesetzten Seiten des sich in Vertikalrichtung erstreckenden Abschnitts (25) angeordnet sind, und
ein Stützrohr (26, 30), das an dem sich in Vertikalrichtung erstreckenden Abschnitt (25) befestigt ist und sich in einer Rahmenbreitenrichtung erstreckt, wobei das Paar von Seitenplatten (50L, 50R) an jeweiligen Enden des Stützrohres (26, 30) befestigt ist, wobei
der sich in Vertikalrichtung erstreckende Abschnitt (25) ein oder mehrere kastenförmige Rohre einschließt, **dadurch gekennzeichnet, dass**
das Stützrohr (26, 30) mit einer Oberfläche einer Fahrzeugvorderseite oder einer Fahrzeugrückseite des einen oder der mehreren kastenförmigen Rohre verbunden ist.

## Revendications

1. Motocycle (1), comprenant :
un cadre principal (24), comportant une partie à extension verticale (25) ;
une paire de plaques latérales (50L, 50R), agencées séparément sur des côtés opposés de la partie à extension verticale (25) ; et
un tube de support (26, 30), fixé sur la partie à extension verticale (25) et s'étendant dans une direction de la largeur du véhicule, la paire de plaques latérales (50L, 50R) étant fixée sur les extrémités respectives du tube de support (26, 30) ; dans lequel
la partie à extension verticale (25) englobe un ou plusieurs tubes en forme de caisson, **caractérisé en ce que** :
le tube de support (26, 30) est relié à une surface sur côté avant d'un véhicule ou un côté arrière d'un véhicule de l'un ou des plusieurs tubes en forme de caisson.

2. Motocycle (1) selon la revendication 1, dans lequel la partie à extension verticale (25) est agencée dans un centre de la largeur du véhicule.

3. Motocycle (1) selon les revendications 1 ou 2, dans lequel le cadre principal (24) comprend en outre une partie s'étendant vers l'avant et vers l'arrière (22), s'étendant vers l'arrière d'un tube de direction (21) dans un centre de la largeur du véhicule.

4. Motocycle (1) selon l'une quelconque des revendications précédentes, dans lequel la partie à extension verticale (25) englobe plusieurs tubes en forme de caisson ;
les plusieurs tubes en forme de caisson (25F, 25B) étant agencés dans la direction allant vers l'avant et vers l'arrière du véhicule et étant reliés les uns aux autres.

5. Motocycle (1) selon la revendication 4, dans lequel
les plusieurs tubes en forme de caisson (25F, 25B) sont agencés de sorte que leurs surfaces plates font face à la direction allant vers l'avant et vers l'arrière du véhicule ; et
le tube de support (26, 30) est relié à la surface sur le côté avant du véhicule ou le côté arrière du véhicule des plusieurs tubes en forme de caisson.

6. Motocycle (1) selon l'une quelconque des revendications précédentes, dans lequel le tube en forme de caisson comporte une rainure (25b).

7. Motocycle (1) selon l'une quelconque des revendications précédentes, comprenant en outre une console (27L, 27R) reliée à la partie à extension verticale, la console (27L, 27R) étant adaptée pour être fixée à un carter (2a) d'un moteur (2).

8. Motocycle (1) selon la revendication 7, dans lequel une extrémité avant d'un support arrière (36L, 36R) est reliée à la console (27L, 27R) et s'étend vers l'arrière et vers le haut par rapport à la partie à extension verticale (25).

9. Motocycle (1) selon l'une quelconque des revendications précédentes, dans lequel le tube de support (26, 30) est un tube en forme de caisson et est relié à une extrémité inférieure de la partie à extension verticale (25).

10. Motocycle (1) selon l'une quelconque des revendications précédentes, dans lequel chaque plaque latérale (50L, 50R) est fixée sur le tube de support (26, 30) au niveau de plusieurs positions.

11. Motocycle (1) selon l'une quelconque des revendications 7 à 10, dans lequel la console (27L, 27R), sur laquelle est fixé un côté arrière d'un carter (2a) d'un moteur (2), est reliée au tube de support (26, 30).

12. Motocycle (1) selon l'une quelconque des revendications précédentes, comprenant en outre un tube oblique (23), s'étendant vers le bas à partir d'un tube de direction (21), une extrémité inférieure du tube oblique (23) étant fixée sur un côté avant du carter (2a).

13. Motocycle (1) selon l'une quelconque des revendications précédentes, dans lequel la partie à extension verticale (25) a une largeur variable le long de sa direction verticale.

14. Cadre de motocycle (24), comprenant :
une partie à extension verticale (25) ;
une paire de plaques latérales (50L, 50R) agencées séparément sur des côtés opposés de la partie à extension verticale (25) ; et
un tube de support (26, 30), fixé sur la partie à extension verticale (25) et s'étendant dans une direction de la largeur du cadre, la paire de plaques latérales (50L ; 50R) étant fixée sur les extrémités respectives du tube de support (26, 30) ;
la partie à extension verticale (25) englobant un ou plusieurs tubes en forme de caisson, **caractérisé en ce que**
le tube de support (26, 30) est fixé sur une surface sur côté avant du véhicule ou un côté arrière du véhicule de l'un ou des plusieurs tubes en forme de caisson.
